# EUROPÄISCHE PATENTSCHRIFT

(11) **EP 2 560 826 B1**
(45) Veröffentlichungstag und Bekanntmachung des Hinweises auf die Patenterteilung: **05.03.2014**
(21) Anmeldenummer: 11713687.9
(22) Anmeldetag: 06.04.2011
(51) Int. Cl.: B60B 7/00, B60B 7/04, B60B 1/06, B60B 3/10, B60B 19/10

(54) **FELGE FÜR EIN FAHRZEUGRAD**
RIM FOR A VEHICLE WHEEL
JANTE POUR ROUE DE VÉHICULE

(30) Priorität: 17.04.2010 DE 102010015319
(43) Veröffentlichungstag der Anmeldung: 27.02.2013
(73) Patentinhaber: Audi AG, 85045 Ingolstadt (DE)
(72) Erfinder: KUNSCH, Peter, 85123 Karlskron (DE); KRAUS, Stephan, 85049 Ingolstadt (DE)
(74) Vertreter: Engelhardt, Harald
(86) Internationale Anmeldenummer: PCT/EP2011/001692
(87) Internationale Veröffentlichungsnummer: WO 2011/128037

(56) Entgegenhaltungen:
- EP-A2- 0 145 487
- EP-A2- 1 319 526
- JP-A- 61 244 601
- US-A1- 2009 195 053

## Beschreibung

Die Erfindung betrifft eine Felge für ein Fahrzeugrad, die eine Nabe, ein Felgenbett sowie mehrere zwischen der Nabe und dem Felgenbett über dem Umfang verteilt angeordneten Speichen aufweist, zwischen denen Zwischenräume vorgesehen sind, die durch schwenkbar gelagerte, mittels Aktuatoren betätigbare Lüftungsklappen zumindest teilweise abzudecken oder freizulegen sind, während sich das mit dem Fahrzeugrad ausgerüstete Fahrzeug bewegt.

Die Aerodynamik spielt bei der Konzeption von verbrauchsarmen Fahrzeugen eine immer größere Rolle. Dabei ist die Aerodynamik bei Fahrzeugrädern von großer Bedeutung. Zum Einen sorgen große, offene Räder dafür, dass die Bremsen hinreichend gut belüftet und gekühlt werden. Andererseits ist das offene Design nachteilig für die Aerodynamik. Es wird daher nach Lösungen gesucht, um die Bremsenkühlung und die Aerodynamik zu optimieren.

Die Eingangs erwähnte Felge für ein Fahrzeugrad bzw. das Fahrzeugrad ist aus der EP 1 319 526 A2 bekannt. Bei diesem bekannten Fahrzeugrad kann ein Abdeckelement, welches in den Zwischenräumen zwischen den Speichen angeordnet ist, mittels eines Aktuators gezielt in eine jeweilig gewünschte Position bewegt werden. Die EP 1 319 526 A2 ist dabei hauptsächlich auf die Energieversorgung der Aktuatoren gerichtet, und es wird eine Energieversorgung aus der Rotationsenergie des Rades oder aus dem bei der Fahrt des Fahrzeugs auftretenden Fahrtwind vorgeschlagen. Nachteilig bei diesem Fahrzeugrad, das eine aufwendige Mechanik erforderlich ist, die durch die hohen Kräfte, die auf ein Fahrzeugrad in der Fahrt wirken, d.h. in Z-Richtung circa 50 g und in Rotationsrichtung bis zu 800 g, schnell beschädigt werden.

Dem gegenüber liegt der Erfindung die Aufgabe zugrunde, eine Felge für ein Fahrzeugrad bereit zu stellen, bei der die Lüftungsklappen mit einer einfachen und zuverlässigen Mechanik bedient werden können, um einerseits eine ausreichende Belüftung für die Bremsen und andererseits eine gute Aerodynamik zu erreichen. Insgesamt soll die Mechanik widerstandsfähig gegen die in der Fahrt auftretenden Kräfte sein.

Dazu ist de erfindungsgemäße Felge für ein Fahrzeugrad dadurch gekennzeichnet, dass die Lüftungsklappen die Zwischenräume großflächig ausfüllen, und dass die Aktuatoren über eine Nocken- oder Kulissenverbindung mit den zugehörigen Lüftungsklappen verbunden sind. Durch die großflächige Ausgestaltung der Lüftungsklappen wird in vorteilhafter Weise erreicht, dass bereits eine kleine Schwenkbewegung der Lüftungsklappen ausreicht, um die Luftzufuhr zu den Bremsen und damit deren Kühlung in ausreichendem Maße liefern zu können. Die erforderlichen, kleinen Auslenkungsbewegungen der Lüftungsklappen können in vorteilhafter Weise durch Benutzung von extrem leichten Aktuatoren bewirkt werden, die zudem, bedingt durch ihren Aufbau, hoch hitze- und schmutzresistent sind. Schon mit Arbeitsbewegungen von circa 2 mm und günstigen Hebelverhältnissen können die Lüftungsklappen über die Nocken - oder die Kulissenverbindung ausreichend verstellt werden.

Eine vorteilhafte Ausgestaltung der erfindungsgemäßen Felge ist dadurch gekennzeichnet, dass die Lüftungsklappe über eine radial zu dem Fahrzeugrad verlaufende, drehbar gelagerte und mit der Lüftungsklappe verbundene Schwenkachse an dem Fahrzeugrad befestigt ist, und dass die Nockenverbindung einen an der Schwenkachse angeordneten Nocken aufweist, mit dem der Aktuator drehbar verbunden ist, wobei die Wirkungsrichtung des Aktuators senkrecht zu der Schwenkachse steht. Durch Verwendung einer derartigen Nockenverbindung zwischen dem Aktuator und der zugehörigen Schwenkachse lässt sich eine günstige Kraftübertragung zwischen den Komponenten erzielen, wobei die Konstruktion robust gegen von außen einwirkende Kräfte und Schmutzeinwirkung ist. Durch eine Abstimmung der Exzentrizität des Nockens zur Schwenkachse und die Dimensionierung der Breite der Lüftungsklappe an dem Felgenbett kann die Übersetzung zwischen Aktuator und der durch ihn betätigten Schwenkachse so eingestellt werden, dass unterschiedliche Kraftniveaus und Längenänderungscharakteristiken der Aktuatoren kompensiert werden können.

Eine weitere vorteilhafte Ausgestaltung der erfindungsgemäßen Felge ist dadurch gekennzeichnet, dass die Lüftungsklappe über eine radial zu dem Fahrzeugrad verlaufende, drehbar gelagerte und mit der Lüftungsklappe verbundene Achse an dem Fahrzeugrad befestigt ist, dass der Aktuator in der als Hohlkörper ausgebildeten Schwenkachse angeordnet ist und dass die Kulissenverbindung eine an der Schwenkachse angeordnete Kulissenkurve aufweist, in der ein mit der Schwenkachse verbundener Kulissenstift eingreift, der durch den Aktuator in der Kulissenkurve verschiebbar ist. Dabei lässt sich die Übersetzung zwischen dem Aktuator und der durch ihn getätigten Schwenkachse bei einer derartigen Kulissenverbindung über die Längenänderung des Aktuators und die Steigung der Kulissenkurve abstimmen. Durch die Anordnung des Aktuators in der als Hohlkörper ausgebildeten Schwenkachse kann der Aktuator auch auf einfache Weise als Reihenschaltung von mehreren Piezo-Aktuatoren oder sogenannten Stacks ausgebildet werden, wobei der Aktuator vor Umwelteinflüssen in der hohlen Drehachse der Lüftungsklappen geschützt wird.

Eine weitere vorteilhafte Ausgestaltung der erfindungsgemäßen Felge ist dadurch gekennzeichnet, dass eine zwischen dem Felgenbett und dem Kulissenkörper wirksame Druckfeder vorgesehen ist, die bei stromlosem Aktuator die Lüftungsklappe in die geschlossene Stellung vorspannt. Durch diese Anordnung einer Druckfeder kann die Lüftungsklappe in vorteilhafter Weise geschlossen gehalten werden, wenn der Aktuator stromlos ist.

Eine weitere vorteilhafte Ausgestaltung der erfindungsgemäßen Felge ist dadurch gekennzeichnet, dass an dem Felgenbett eine Sperre angeordnet ist, die bei stromlosem Aktuator die Lüftungsklappe in der offenen Stellung arretiert. Auf diese Weise kann die Betätigung der Lüftungsklappe durch den Aktuator in dem Betriebszustand, bei dem die Lüftungsklappe offen ist, stromlos gehalten werden. Damit kann in vorteilhafter Weise eine Überhitzung der Bremsen vermieden werden. Sinkt die Umgebungstemperatur wieder, kann die Sperre die Drehbewegung wieder freigeben, und die Druckfeder drückt die Ablenkachse samt Flügel wieder in ihre Ausgangsposition zurück.

Eine weitere vorteilhafte Ausgestaltung der erfindungsgemäßen Felge ist dadurch gekennzeichnet, dass die Sperre eine Bimetallfeder aufweist, die bei Erreichen einer vorgegebenen Temperatur in eine Ausnehmung in dem Kulissenkörper eingreift, wenn die Ausnehmung der Bimetallfeder gegenüber liegt, wobei bei dieser Stellung des Kulissenkörpers die Lüftungsklappe geöffnet ist. Damit ist die Funktion der Sperre automatisch mit der Umgebungstemperatur gekoppelt. Auch lässt sich über die Abstimmung der Bimetallfeder eine Hysterese integrieren, um auch bei abgestelltem, stromlosen Fahrzeug die Lüftungsklappe so lange offen zu halten, bis eine Mindesttemperatur unterschritten wird.

Eine weitere vorteilhafte Ausgestaltung der erfindungsgemäßen Felge ist dadurch gekennzeichnet, dass die Lüftungsklappe an dem Felgenbett des Fahrzeugrads einwärts und auswärts zu der Felge schwenkbar gelagert ist, und dass die Nockenverbindung einen an einem Ansatz der Lüftungsklappe angeordneten Nocken aufweist, der durch den Aktuator entlang einer Kulissenkurve bewegbar ist. Um diversen Raddesignerfordernissen Rechnung zu tragen, kann die Lüftungsklappe auch einwärts und auswärts zu der Felge schwenkbar gelagert sein, wobei die Nockenverbindung eine vorteilhafte und einfache Betätigung der auf diese Weise gelagerten Lüftungsklappe ermöglicht. Weiterhin lassen sich so zusätzliche Lüftungsquerschnitte erzeugen, ohne dass Teile der Lüftungsklappe über die Radkontur hinausstehen. Dies verhindert aerodynamische Nachteile und minimiert gleichermaßen die Gefahr von Beschädigungen beim Fahren, beispielsweise durch Randsteine.

Eine weitere vorteilhafte Ausgestaltung der erfindungsgemäßen Felge ist dadurch gekennzeichnet, dass der Aktuator in der Speiche der Felge angeordnet ist. Durch die Anordnung der Aktuatoren in den Speichen der Felge ist auch hier eine ausreichend große Menge der Aktuatoren, bzw. eine große Stack-Länge, möglich, und die Aktuatoren sind geschützt und können geborgen in den Speichen angeordnet werden. Mit anderen Worten ist die Lüftungsklappe in der Felge an ihrem außenliegenden Punkt drehbar gelagert und ist in der Ausgangsstellung geschlossen. Wenn der Aktuator bestromt wird, ändert sich dessen Länge und er schiebt damit den Ansatz der Lüftungsklappe entlang der Kurvenkollision. Dadurch wird die Lüftungsklappe nach innen geöffnet.

Eine weitere vorteilhafte Ausgestaltung der erfindungsgemäßen Felge ist dadurch gekennzeichnet, dass an der Speiche eine Sperre angeordnet ist, die bei stromlosem Aktuator in eine Ausnehmung an der Lüftungsklappe angreift und die Lüftungsklappe in der offenen Stellung arretiert. Die Sperre dient wiederum in vorteilhafter Weise dazu, die Lüftungsklappe bei stromlosen Aktuator offen zu halten.

Eine weitere vorteilhafte Ausgestaltung der erfindungsgemäßen Felge ist dadurch gekennzeichnet, dass die Sperre eine Bimetallfeder aufweist, die bei Erreichen einer vorgegebenen Temperatur in die Ausnehmung in der Lüftungsklappe eingreift, wenn die Ausnehmung der Bimetallfeder gegenüber liegt, wobei bei dieser Stellung der Lüftungsklappe diese geöffnet ist. Auch hier wird die Arretierung durch die Bimetallfeder in vorteilhafter Weise automatisch über die Temperatur gesteuert.

Eine weitere vorteilhafte Ausgestaltung der erfindungsgemäßen Felge ist dadurch gekennzeichnet, dass die Lüftungsklappe asymmetrisch zu der Schwenkachse ausgebildet ist, wobei die Länge des Teils der Lüftungsklappe, der, wenn das Rad bei einer Fahrt des Fahrzeugs sich dreht, in Drehrichtung des Rades hinter der Schwenkachse liegt, wesentlich größer ist als der Teil der Lüftungsklappe, der vor der Schwenkachse liegt, wobei durch eine kleine Auslenkung des Aktuators eine größere Öffnung der Lüftungsklappe erreicht werden kann als bei einer symmetrischen Lüftungsklappe.

Eine weitere vorteilhafte Ausgestaltung der erfindungsgemäßen Felge ist gekennzeichnet durch eine Schleifringverbindung zur Stromversorgung der Aktuatoren. Derartige Schleifringverbindungen sind mit einem ausreichenden Grad an Sicherheit entwickelt und lassen sich auf einfache Weise in die Radmontage integrieren.

Eine weitere vorteilhafte Ausgestaltung der erfindungsgemäßen Felge ist gekennzeichnet durch eine induktive Übertragungsverbindung zur Stromversorgung der Aktuatoren. Durch die bekannten induktiven Übertragungseinrichtungen wird der Verschleiß herabgesetzt und trotzdem ist eine ausreichende Stromversorgung der Aktuatoren möglich.

Eine weitere vorteilhafte Ausgestaltung der erfindungsgemäßen Felge ist gekennzeichnet, dass die Aktuatoren Piezo-Aktuatoren, sog. Stacks, oder Piezo-Biegwandler sind. Derartige Aktuatoren haben den Vorteil, dass sie extrem leicht sind und außerdem Hitze- und Schmutzresistent ausgebildet sind.

Ausführungsbeispiele der Erfindung werden nun anhand der beiliegenden Zeichnungen beschrieben.
Fig. 1 zeigt den inneren Teil einer Felge eines Fahrzeugrades mit einer auf einer radialen Schwenkachse gelagerten Lüftungsklappe;
Fig. 2 zeigt ein Detail der Nockenverbindung, das in Fig. 1 durch einen Kreis markiert ist;
Fig. 3 zeigt einen Teil einer Felge eines Fahrzeugrades mit einer auf einer radialen Schwenkachse gelagerten Lüftungsklappe mit einer Kulissenverbindung zwischen Aktuator und Lüftungsklappe;
Fig. 4 zeigt ein Detail der Nockenverbindung, das in Fig. 3 durch einen Kreis markiert ist;
Fig. 5 zeigt ein weiteres Ausführungsbeispiel der erfindungsgemäßen Felge in Draufsicht;
Fig. 6 zeigt einen Schnitt durch die Felge von Fig. 5 bei geschlossener Lüftungsklappe;
Fig. 7 zeigt schematisch die Kulissenverbindung zwischen dem Aktuator und der Lüftungsklappe;
Fig. 8 zeigt einen Schnitt durch die Felge von Fig. 5 bei geöffneter Lüftungsklappe;
Fig. 9 zeigt eine schematische Darstellung der Kulissenverbindung zwischen dem Aktuator und der Lüftungsklappe bei geöffneter Lüftungsklappe;
Fig. 10 zeigt eine schematische Draufsicht auf ein weiteres Ausführungsbeispiel der erfindungsgemäßen Felge mit abgewandelten Design an den Lüftungsklappen;
Fig. 11 zeigt schematisch eine Lüftungsklappe nach Fig. 10 im geschlossen Zustand;
Fig. 12 zeigt schematisch eine Lüftungsklappe von Fig. 10 im geöffneten Zustand;
Fig. 13 zeigt schematisch den Schnitt durch eine Fege für ein Fahrzeugrad mit einer induktiven Stromverbindung zu dem Aktuator; und
Fig. 14 zeigt schematisch einen Schnitt durch eine Fege für ein Fahrzeugrad mit einer Schleifringverbindung zu dem Aktuator.

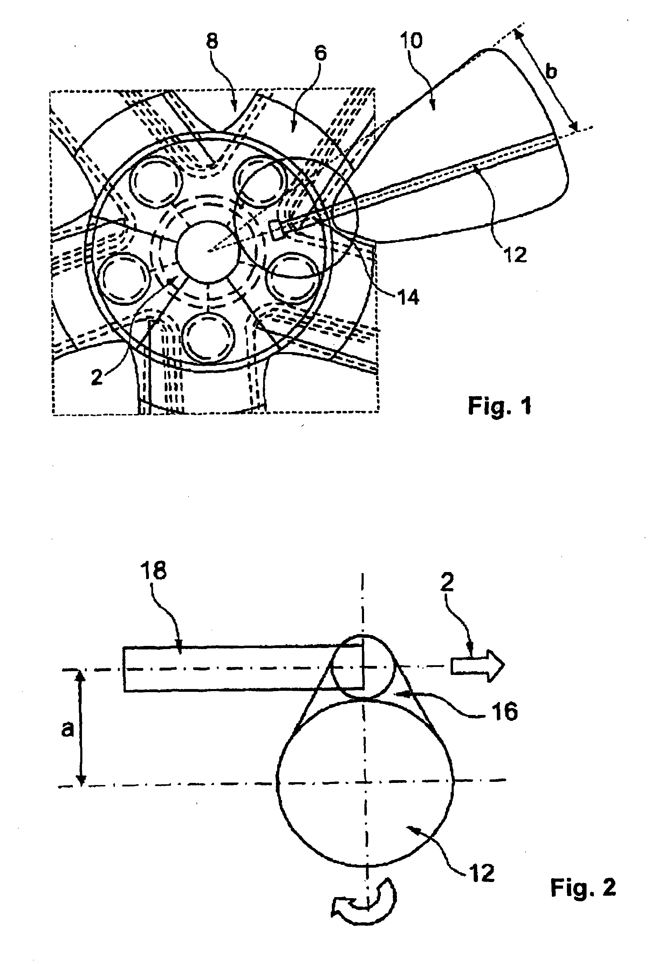

Fig. 1 zeigt den inneren Teil einer Felge eines Fahrzeugrades mit einer auf einer radialen Schwenkachse gelagerten Lüftungsklappe. Die Felge weist eine Nabe 2, ein Felgenbett (in Figur 1 nicht gezeigt) sowie Speichen 6 auf, die sich zwischen der Nabe 2 und dem Felgenbett erstrecken und über den Umfang des Fahrzeugrads verteilt angeordnet sind. Zwischen den Speichen 6 werden Zwischenräume 8 gebildet, in denen Lüftungsklappen 10 angeordnet sind, die über Schwenkachsen 12, die sowohl an dem Felgenbett als auch an der Nabe 2 drehbar gelagert sind, an dem Fahrzeugrad befestigt. Eines der Schwenklager 14 an der Nabe 2 ist thematisch in Figur 1 gezeigt.

Fig. 2 zeigt ein Detail der Nockenverbindung, das in Fig. 1 durch einen Kreis markiert ist. Die Schwenkachse 12 weist danach einen Nocken 16 auf, an dem ein Aktuator 18 schwenkbar gelagert ist. Der Aktuator 18 ist im Bereich der Nabe 2 senkrecht zu der Achse 12 angeordnet, so dass bei einer Längenänderung des Aktuators 18, die durch den Pfeil L in Figur 2 dargestellt ist, eine Drehung der Schwenkachse 12 erfolgt, wie durch den Pfeil S in Figur 2 gezeigt ist. Da die Lüftungsklappen 10 die Zwischenräume 8 großflächig ausfüllen und da die Aktuatoren 18 über den Nocken 16 mit der Schwenkachse 12 und damit mit der Lüftungsklappe 10 verbunden sind, kann die Öffnung in den Zwischenräumen 8, die durch ein Verschwenken der Lüftungsklappen 10 gebildet wird, dadurch eingestellt werden, dass die Maße "b" in Figur 1 und "a" in Figur 2 entsprechend abgestimmt werden.

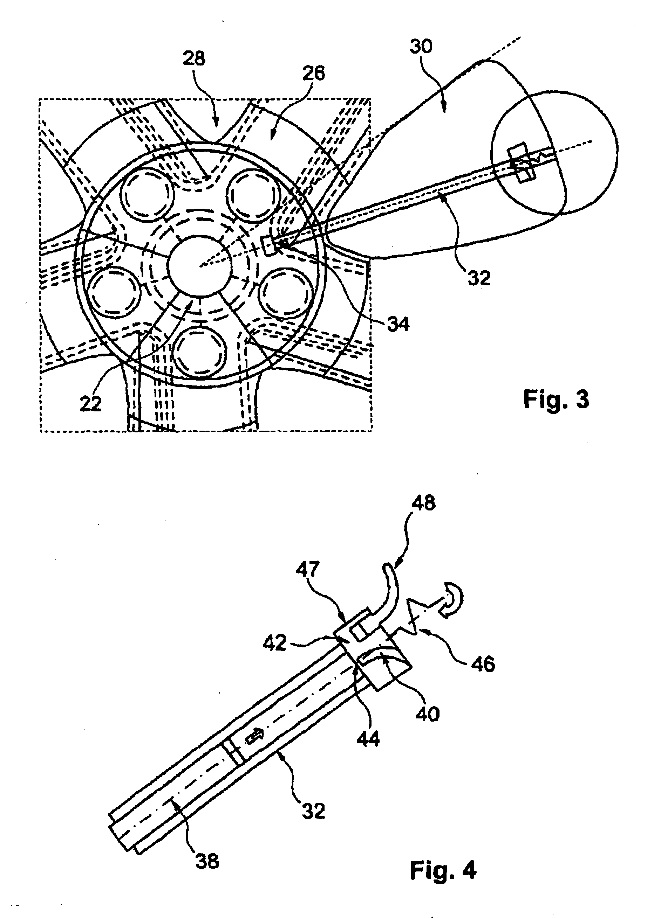

Fig. 3 zeigt einen Teil einer Felge eines Fahrzeugrades nach einem weiteren Ausführungsbeispiel. Die Fahrzeugrad umfasst wiederum eine Nabe 20, die über Speichen 26 mit dem Felgenbett (nicht gezeigt) verbunden ist, wobei die Zwischenräume 28 gebildet werden, die wiederum durch die Lüftungsklappen 30 großflächig ausgefüllt werden. Die Lüftungsklappen 30 sind über eine radiale Schwenkachse 32, die sich radial zwischen der Nabe 20 und dem Felgenbett erstreckt, an dem Fahrzeugrad schwenkbar befestigt, wie durch das Schwenklager 34 angedeutet ist.

Die Schwenkbewegungen der Lüftungsklappe 30 wird durch einen Aktuator 38 über eine Kulissenverbindung mit der Schwenkachse 32 bewirkt, wobei die Kulissenverbindung aus einer Kulissenkurve 40, die einem Kulissenkörper 42 angeordnet ist und in der ein Nocken 44 durch den Aktuator 38 bewegt wird, gebildet ist, wobei durch die Längenänderung des Aktuators eine Drehbewegung der Schwenkachse 32 erreicht wird.

Der Kulissenkörper 42 ist durch eine Druckfeder 46 vorgespannt, die zwischen dem Felgenbett und dem Kulissenkörper 42 angeordnet ist, so dass die Lüftungsklappe 30 bei stromlosen Aktuator 38 in die geschlossene Stellung vorgespannt ist. Schließlich ist an dem Felgenbett eine Sperre 46 angeordnet, die in der Lage ist, die Lüftungsklappe 30 bei stromlosen Aktuator 38 in der offenen Stellung zu arretieren. Dazu ist eine Ausnehmung 47 in dem Kulissenkörper 42 vorgesehen, in die eine BiMetallfeder 48 eingreift, wenn eine vorgegebene Temperatur erreicht wird, so dass sich die Bi-Metallfeder 48 in die Ausnehmung 47 in dem Kulissenkörper 42 erstrecken kann, wenn die Ausnehmung 47 der Bi-Metallfeder 48 gegenüber liegt. Die Ausnehmung 47 ist so in dem Kulissenkörper 42 angeordnet, dass das Eingreifen der BiMetallfeder 48 in die Ausnehmung 47 dann möglich ist, wenn die Lüftungsklappe 30 geöffnet ist.

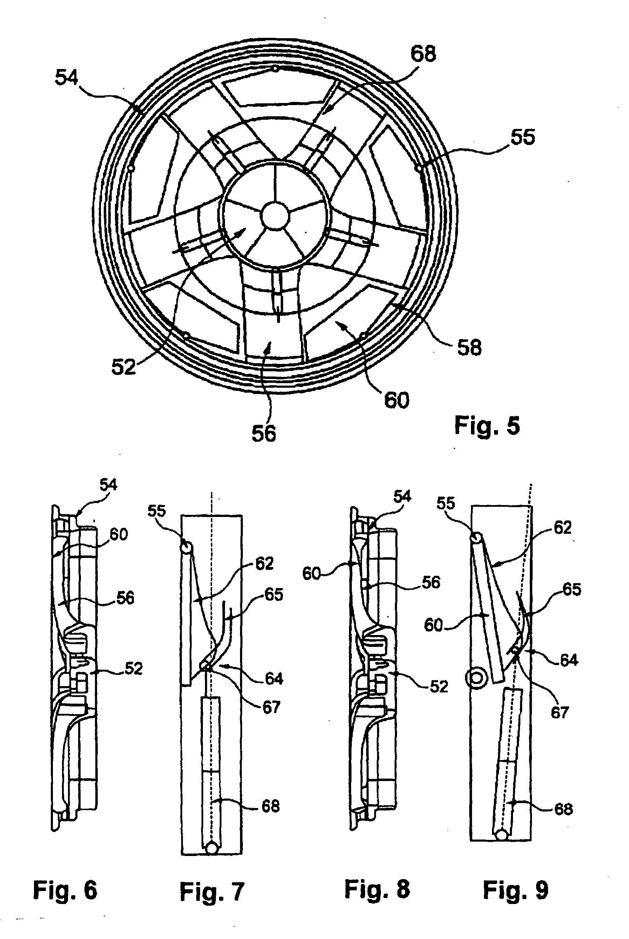

Fig. 5 zeigt ein weiteres Ausführungsbeispiel der erfindungsgemäßen Felge in Draufsicht. Die Felge dieses Ausführungsbeispieles umfasst wiederum eine Nabe 52, Speichen 56, Zwischenräume 58 und Lüftungsklappen 60 sowie ein Felgenbett 54. Die Lüftungsklappen 60 sind in diesem Ausführungsbeispiel an dem Felgenbett 54 einwärts und auswärts zu dem Felgenbett 54 an einem Schwenklager 55 bei dem Felgenbett 54 schwenkbar gelagert.

Die Fig. 7 bis 9 zeigen schematisch die Kulissenverbindung zwischen dem Aktuator und der Lüftungsklappe, einen Schnitt durch die Felge von Fig. 5 bei geöffneter Lüftungsklappe, sowie eine schematische Darstellung der Kulissenverbindung zwischen dem Aktuator und der Lüftungsklappe bei geöffneter Lüftungsklappe. Wie aus den Figuren 7 und 9 ersichtlich ist, hat die Lüftungsklappe 60 einen Ansatz 62, an dem der Aktuator 68 über eine Kulissenverbindung 64 angreift, die eine Kulissenkurve 65 umfasst, in der ein Nocken 67 durch den Aktuator 68 bewegt werden kann. Bei einer Verlängerung des Aktuators 68 wird der Nocken 67 entlang der Kulissenkurve 65 bewegt, so dass die Lüftungsklappe 60 geöffnet wird, wie in den Figuren 8 und 9 dargestellt sind. Bei diesem Ausführungsbeispiel ist der Aktuator 68 in einer zugehörigen Speiche geschützt angeordnet.

Schließlich ist auch bei diesem Ausführungsbeispiel des Fahrzeugrades eine Sperre 68 (siehe Figur 5) vorgesehen, die bei stromlosen Aktuator 68 in eine entsprechende Ausnehmung in der Lüftungsklappe 60 eingreift und die Lüftungsklappe 60 in der offenen Stellung arretiert, ähnlich wie bei dem Ausführungsbeispiel nach Figur 4, wobei die Sperre wiederum eine Bimetallfeder aufweisen kann, die bei Erreichen einer vorgegebenen Temperatur in die entsprechende Ausnehmung in der Lüftungsklappe 60 eingreift, wenn die Ausnehmung der BiMetallfeder gegenüber liegt.

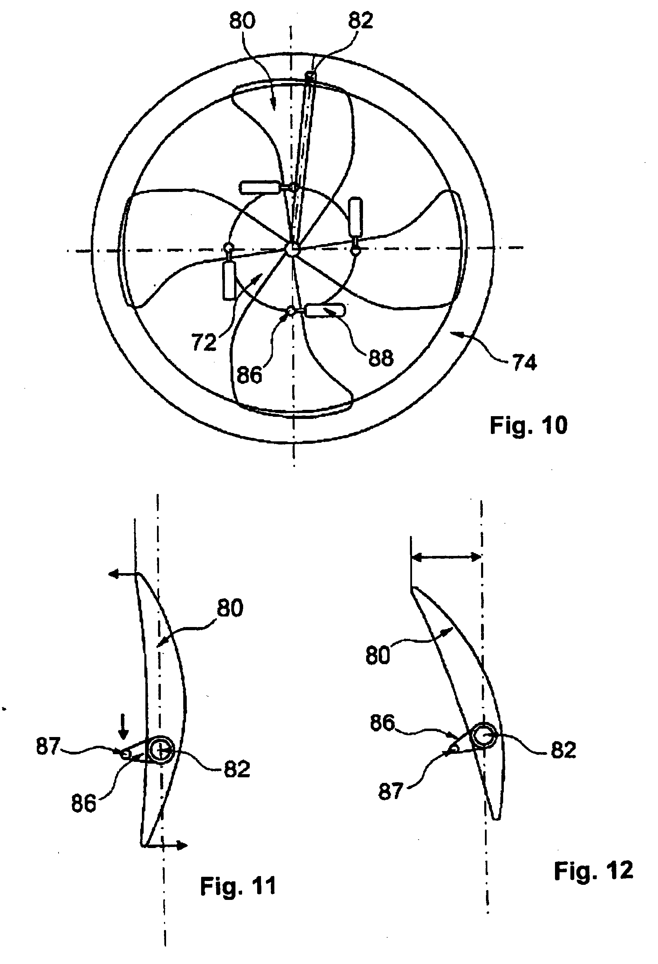

Fig. 10 zeigt eine schematische Draufsicht auf ein weiteres Ausführungsbeispiel der erfindungsgemäßen Felge mit abgewandelten Design an den Lüftungsklappen. Die Felge nach Figur 10 umfasst wiederum eine Nabe 72 und ein Felgenbett 74, wobei die Speichen sowie die Zwischenräume zwischen den Speichen zur Vereinfachung nicht gezeigt sind. Die Lüftungsklappe 80 ist über eine schwenkbar gelagerte Schwenkachse 82, die sich zwischen dem Felgenbett 74 und der Nabe 72 erstreckt, gelagert, wobei die Lüftungsklappen 80 asymmetrisch zu der Schwenkachse 82 ausgebildet sind, d.h. die Länge des Teils der Lüftungsklappe 80, der, wenn das Rad bei einer Fahrt des Fahrzeugs sich dreht, in Drehrichtung des Rades hinter der Schwenkachse liegt, wesentlich größer ist als der Teil der Lüftungsklappe 80, der vor der Schwenkachse liegt. Dadurch kann durch eine geringfügige Verschwenkung der Lüftungsklappe eine große Öffnung für die Luftzufuhr zu den Bremsen erzielt werden.

Die Nockensteuerung für die Schwenkbefähigung der Lüftungsklappen ist in diesem Ausführungsbeispiel wiederum ein Nocken 86, der über eine Schwenkverbindung 87 mit dem senkrecht zu der Schwenkasche angeordneten Aktuator 88 (Figur 10) schwenkbar verbunden ist, so dass die Schwenkachse83 bei einer Längenänderung des Aktuators 88 gedreht und damit die Öffnung der Lüftungsklappe 80 bestimmt wird, wie in den Figuren 11 und 12 gezeigt ist. L

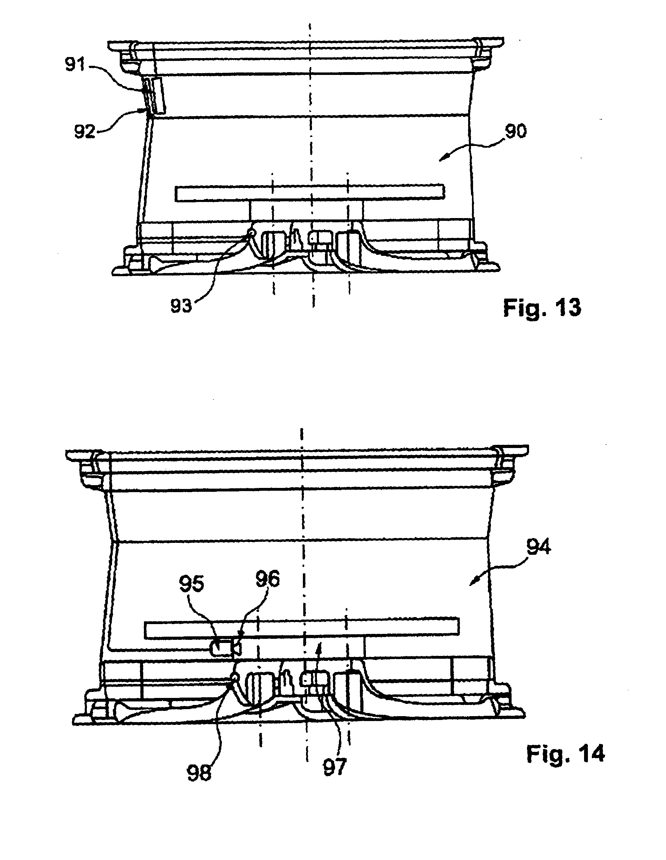

Fig. 13 zeigt schematisch den Schnitt durch eine Felge 90 für ein Fahrzeugrad mit einer induktiven Stromverbindung zu einem Aktuator 93. Die induktive Kopplung wird bei diesem Ausführungsbeispiel des Fahrzeugrades 90 durch eine Sendespule 91, die drehfest mit der Radaufhängung verbunden ist, und eine Empfangsspule 92 gebildet, die mit dem Aktuator 93 verbunden ist, der entsprechend einem der vorstehend erläuterten Ausführungsbeispiele ausgebildet sein kann.

Fig. 14 zeigt schematisch einen Schnitt durch eine Felge 94 für ein Fahrzeugrad mit einer Schleifringverbindung zu einem Aktuator 98. Bei diesem Ausführungsbeispiel der Felge 94 umfasst die Stromversorgung eine Bürste 95, die drehfest mit der Radaufhängung verbunden ist und an einem Schleifring 96 angreift, der an der Nabe 97 der Felge angeordnet ist und elektrisch mit dem Aktuator 98 verbunden ist.

## Patentansprüche

1. Felge für ein Fahrzeugrad, die eine Nabe (2, 22, 52, 72), ein Felgenbett (54, 74) sowie mehrere zwischen der Nabe (2, 22, 52, 72) und dem Felgenbett (54, 74) über dem Umfang verteilt angeordneten Speichen (6, 26, 56) aufweist, zwischen denen Zwischenräume (8, 28, 58) vorgesehen sind, die durch schwenkbar gelagerte, mittels Aktuatoren (18, 38, 68, 88, 93, 98) betätigbare Lüftungsklappen (10, 30, 60, 80) zumindest teilweise abzudecken oder freizulegen sind, während sich das mit dem Fahrzeugrad ausgerüstete Fahrzeug bewegt,
**dadurch gekennzeichnet, dass**
die Lüftungsklappen (10, 30, 60, 80) die Zwischenräume (8, 28, 58) großflächig ausfüllen, und dass
die Aktuatoren (18, 38, 68, 88, 93, 98) über eine Nocken- oder Kulissenverbindung mit den zugehörigen Lüftungsklappen (10, 30, 60, 80) verbunden sind.

2. Felge nach Anspruch 1, **dadurch gekennzeichnet, dass** die Lüftungsklappe (10, 80) über eine radial zu dem Fahrzeugrad verlaufende, drehbar gelagerte und mit der Lüftungsklappe (10, 80) verbundene Schwenkachse (12, 82) an der Felge befestigt ist, und dass die Nockenverbindung einen an der Schwenkachse (12, 82) angeordneten Nocken (16, 86) aufweist, mit dem der Aktuator (18, 88) drehbar verbunden ist, wobei die Wirkungsrichtung des Aktuators (18, 88) senkrecht zu der Schwenkachse (12, 82) steht.

3. Felge nach Anspruch 1, **dadurch gekennzeichnet, dass** die Lüftungsklappe (30) über eine radial zu dem Fahrzeugrad verlaufende, drehbar gelagerte und mit der Lüftungsklappe (30) verbundene Schwenkachse (32) an der Felge befestigt ist, dass der Aktuator (38) in der als Hohlkörper ausgebildeten Schwenkachse (32) angeordnet ist und dass die Kulissenverbindung eine an der Schwenkachse (32) angeordnete Kulissenkurve (40) aufweist, in der ein mit der Schwenkachse (32) verbundener Kulissenstift (44) eingreift, der durch den Aktuator (38) in der Kulissenkurve (4) verschiebbar ist.

4. Felge nach Anspruch 3, **dadurch gekennzeichnet, dass** eine zwischen dem Felgenbett (54, 74) und dem Kulissenkörper (42) wirksame Druckfeder (46) vorgesehen ist, die bei stromlosem Aktuator die Lüftungsklappe (30) in die geschlossene Stellung vorspannt.

5. Felge nach Anspruch 3, **dadurch gekennzeichnet, dass** an dem Felgenbett (54, 74) eine Sperre angeordnet ist, die bei stromlosem Aktuator die Lüftungsklappe (30) in der offenen Stellung arretiert.

6. Felge nach Anspruch 5, **dadurch gekennzeichnet, dass** die Sperre eine Bimetallfeder (48) aufweist, die bei Erreichen einer vorgegebenen Temperatur in eine Ausnehmung (47) in dem Kulissenkörper (42) eingreift, wenn die Ausnehmung (47) der Bimetallfeder (48) gegenüber liegt, wobei bei dieser Stellung des Kulissenkörpers (42) die Lüftungsklappe (30) geöffnet ist.

7. Felge nach Anspruch 1, **dadurch gekennzeichnet, dass** die Lüftungsklappe (60) an dem Felgenbett (54, 74) des Fahrzeugrads einwärts und auswärts zu der Felge schwenkbar gelagert ist, und dass die Nockenverbindung einen an einem Ansatz (62) der Lüftungsklappe (60) angeordneten Nocken (67) aufweist, der durch den Aktuator (68) entlang einer Kulissenkurve (65) bewegbar ist.

8. Felge nach Anspruch 7, **dadurch gekennzeichnet, dass** der Aktuator (68) in der Speiche (56) des Fahrzeugrades angeordnet ist.

9. Felge nach Anspruch 7, **dadurch gekennzeichnet, dass** an der Speiche (56) eine Sperre (68) angeordnet ist, die bei stromlosem Aktuator in eine Ausnehmung an der Lüftungsklappe (60) angreift und die Lüftungsklappe (60) in der offenen Stellung arretiert.

10. Felge nach Anspruch 9, **dadurch gekennzeichnet, dass** die Sperre (68) eine Bimetallfeder aufweist, die bei Erreichen einer vorgegebenen Temperatur in die Ausnehmung in der Lüftungsklappe (60) eingreift, wenn die Ausnehmung der Bimetallfeder gegenüber liegt, wobei bei dieser Stellung der Lüftungsklappe (60) diese geöffnet ist.

11. Felge nach Anspruch 1, **dadurch gekennzeichnet, dass** die Lüftungsklappe (80) asymmetrisch zu der Schwenkachse (82) ausgebildet ist, wobei die Länge des Teils der Lüftungsklappe (80), der, wenn das Rad bei einer Fahrt des Fahrzeugs sich dreht, in Drehrichtung des Rades hinter der Schwenkachse (82) liegt, wesentlich größer ist als der Teil der Lüftungsklappe (80), der vor der Schwenkachse (82) liegt.

12. Felge nach einem der vorhergehenden Ansprüche, **gekennzeichnet durch** eine Schleifringverbindung zur Stromversorgung der Aktuatoren (98).

13. Felge nach einem der vorhergehenden Ansprüche, **gekennzeichnet durch** eine induktive Übertragungsverbindung zur Stromversorgung der Aktuatoren (93).

14. Felge nach einem der vorhergehenden Ansprüchen, **dadurch gekennzeichnet, dass** die Aktuatoren (18, 38, 68, 88, 93, 98) Piezo-Aktuatoren, sog. Stacks, oder Piezo-Biegwandler sind.

## Claims

1. Rim for a vehicle wheel, comprising a hub (2, 22, 52, 72), a rim well (54, 74) and a plurality of spokes (6, 26, 56) distributed across the circumference between the hub (2, 22, 52, 72) and the rim well (54, 74), between which spokes gaps (8, 28, 58) are provided which can be covered or exposed at least in part by ventilation flaps (10, 30, 60, 80) which are pivotably mounted and can be actuated by actuators (18, 38, 68, 88, 93, 98) during movement of the vehicle equipped with the vehicle wheel,
**characterised in that**
the ventilation flaps (10, 30, 60, 80) fill the gaps (8, 28, 58) in a planar manner, and **in that** the actuators (18, 38, 68, 88, 93, 98) are connected to the associated ventilation flaps (10, 30, 60, 80) by a cam or crank connection.

2. Rim according to claim 1, **characterised in that** the ventilation flap (10, 80) is attached to the rim by a rotatably mounted pivot shaft (12, 82) which extends radially to the vehicle wheel and is connected to the ventilation flap (10, 80), and **in that** the cam connection comprises a cam (16, 86) arranged on the pivot shaft (12, 82), to which cam the actuator (18, 88) is rotatably connected, the direction of action of the actuator (18, 88) being perpendicular to the pivot shaft (12, 82).

3. Rim according to claim 1, **characterised in that** the ventilation flap (30) is attached to the rim by a rotatably mounted pivot shaft (32) which extends radially to the vehicle wheel and is connected to the ventilation flap (30), **in that** the actuator (38) is arranged in the pivot shaft (32), which is formed as a hollow body, and **in that** the crank connection comprises a crank curve (40) arranged on the pivot shaft (32), in which curve a crank pin (44) connected to the pivot shaft (32) engages, which crank pin can be displaced in the crank curve (4) by means of the actuator (38).

4. Rim according to claim 3, **characterised in that** a compression spring (46) is provided which acts between the rim well (54, 74) and the crank body (42) and biases the ventilation flap (30) into the closed position when the actuator is not powered.

5. Rim according to claim 3, **characterised in that** a catch is arranged on the rim well (54, 74) and locks the ventilation flap (30) in the open position when the actuator is not powered.

6. Rim according to claim 5, **characterised in that** the catch comprises a bimetallic spring (48) which engages in a recess (47) in the crank body (42) when a predetermined temperature is reached, if the recess (47) is opposite the bimetallic spring (48), the ventilation flap (30) being open when the crank body (42) is in this position.

7. Rim according to claim 1, **characterised in that** the ventilation flap (60) is mounted on the rim well (54, 74) of the vehicle wheel so as to be pivotable inwards and outwards relative to the rim, and **in that** the cam connection comprises a cam (67) arranged on an extension (62) of the ventilation flap (60), which cam can be moved along a crank curve (65) by the actuator (68).

8. Rim according to claim 7, **characterised in that** the actuator (68) is arranged in the spoke (56) of the vehicle wheel.

9. Rim according to claim 7, **characterised in that** a catch (68) is arranged on the spoke (56) and engages in a recess in the ventilation flap (60) and locks the ventilation flap (60) in the open position when the actuator is not powered.

10. Rim according to claim 9, **characterised in that** the catch (68) comprises a bimetallic spring which engages in the recess in the ventilation flap (60) when a predetermined temperature is reached, if the recess is opposite the bimetallic spring, said recess being open when the ventilation flap (60) is in this position.

11. Rim according to claim 1, **characterised in that** the ventilation flap (80) is formed asymmetrically about the pivot shaft (82), the length of the part of the ventilation flap (80) which, during rotation of the wheel on a journey, is located behind the pivot shaft (82) in the direction of rotation of the wheel being substantially larger than the part of the ventilation flap (80) which is located in front of the pivot shaft (82).

12. Rim according to any of the preceding claims, **characterised by** a slip ring connection for supplying power to the actuators (98).

13. Rim according to any of the preceding claims, **characterised by** an inductive transmission connection for supplying power to the actuators (93).

14. Rim according to any of the preceding claims, **characterised in that** the actuators (18, 38, 68, 88, 93, 98) are piezoelectric actuators - what are known as stacks - or flexible piezoelectric transducers.

## Revendications

1. Jante pour roue de véhicule, qui présente un moyeu (2, 22, 52, 72), une embase de jante (54, 74) ainsi que plusieurs rayons (6, 26, 56) aménagés entre le moyeu (2, 22, 52, 72) et l'embase de jante (54, 74) répartis sur la périphérie, entre lesquels rayons sont prévus des espaces intermédiaires (8, 28, 58), qui doivent être couverts ou dégagés au moins en partie par des volets d'aération (10, 30, 60, 80) montés à pivotement et actionnables au moyens d'actionneurs (18, 38, 68, 88, 93, 98), tandis que se déplace le véhicule équipé de la roue,
**caractérisée en ce que** :
les volets d'aération (10, 30, 60, 80) comblent les espaces intermédiaires (8, 28, 58) sur une grande surface et
les actionneurs (18, 38, 68, 88, 93, 98) sont reliés aux volets d'aération associés (10, 30, 60, 80) via une liaison à came ou à coulisse.

2. Jante selon la revendication 1, **caractérisée en ce que** le volet d'aération (10, 80) est fixé à la jante via un axe pivot (18, 82) s'étendant radialement par rapport à la roue du véhicule, monté à rotation et relié au volet d'aération (10, 80) et la liaison à came présente une came (16, 86) aménagée sur l'axe pivot (12, 82), à laquelle l'actionneur (18, 88) est relié à rotation, dans laquelle la direction d'action de l'actionneur (18, 88) est perpendiculaire à l'axe pivot (12, 82).

3. Jante selon la revendication 1, **caractérisée en ce que** le volet d'aération (30) est fixé à la jante via un axe pivot (32) s'étendant radialement par rapport à la roue du véhicule, monté à rotation et relié au volet d'aération (30), l'actionneur (38) est aménagé dans l'axe pivot (32) qui se présente sous la forme d'un corps creux et la liaison à coulisse présente une courbe de coulissement (40) aménagée sur l'axe pivot (32), dans laquelle s'engage une broche coulissante (44) reliée à l'axe pivot (32), qui peut être soumise par l'actionneur (38) à un coulissement dans la courbe de coulissement (4).

4. Jante selon la revendication 3, **caractérisée en ce qu'**il est prévu un ressort de compression (46) opérant entre l'embase de jante (54, 74) et le corps de coulisse (42), lequel ressort précontraint le volet d'aération (30) en position fermée lorsque l'actionneur est hors tension.

5. Jante selon la revendication 3, **caractérisée en ce qu'**il est agencé sur l'embase de jante (54, 74) un dispositif de blocage qui bloque le volet d'aération (30) en position ouverte lorsque l'actionneur est hors tension.

6. Jante selon la revendication 5, **caractérisée en ce que** le dispositif de blocage présente un ressort bimétal (48) qui, lorsqu'une température prédéterminée est atteinte, s'engage dans un évidement (47) du corps de coulisse (42) lorsque l'évidement (47) se trouve en regard du ressort bimétal (48), dans laquelle le volet d'aération (30) est ouvert dans cette position du corps de coulisse (42).

7. Jante selon la revendication 1, **caractérisée en ce que** le volet d'aération (60) est monté à pivotement sur l'embase de jante (54, 74) de la roue du véhicule en dedans et en dehors par rapport à la jante et la liaison à came présente une came (67) agencée sur une pièce rapportée (62) du volet d'aération (60), laquelle came peut être déplacée par l'actionneur (68) le long d'une courbe de coulissement (65).

8. Jante selon la revendication 7, **caractérisée en ce que** l'actionneur (68) est agencé dans le rayon (56) de la roue du véhicule.

9. Jante selon la revendication 7, **caractérisée en ce qu'**il est agencé sur le rayon (56) un dispositif de blocage (68) qui s'engage dans un évidement du volet d'aération (60) lorsque l'actionneur est hors tension et bloque le volet d'aération (60) dans la position ouverte.

10. Jante selon la revendication 9, **caractérisée en ce que** le dispositif de blocage (68) présente un ressort bimétal qui, lorsqu'une température prédéterminée est atteinte, s'engage dans l'évidement du volet d'aération (60) lorsque l'évidement se trouve en regard du ressort bimétal, dans laquelle le volet d'aération (60) est ouvert dans cette position du volet d'aération.

11. Jante selon la revendication 1, **caractérisée en ce que** le volet d'aération (80) se présente de manière asymétrique par rapport à l'axe pivot (82), dans laquelle la longueur de la partie du volet d'aération (80), qui, lorsque la roue tourne au cours du déplacement du véhicule, se trouve dans le sens de rotation de la roue derrière l'axe pivot (82), est sensiblement plus grande que la partie du volet d'aération (80) qui se trouve devant l'axe pivot (82).

12. Jante selon l'une quelconque des revendications précédentes, **caractérisée par** une connexion à bagues collectrices pour alimenter en courant les actionneurs (98).

13. Jante selon l'une quelconque des revendications précédentes, **caractérisée par** une connexion de transmission inductrice pour alimenter en courant les actionneurs (93).

14. Jante selon l'une quelconque des revendications précédentes, **caractérisée en ce que** les actionneurs (18, 38, 68, 88, 93, 98) sont des actionneurs piézoélectriques, ce que l'on appelle des piles, ou des transducteurs de flexion piézoélectriques.
